# FASCICULE DE BREVET EUROPEEN

(11) **EP 0 646 099 B1**
(45) Date de publication et mention de la délivrance du brevet: **07.01.1998**
(21) Numéro de dépôt: 92915845.9
(22) Date de dépôt: 03.08.1992
(51) Int. Cl.: C01F 11/46, C09C 1/02, D21H 19/58, D21H 19/52

(54) **PROCEDE DE PREPARATION D'UNE SUSPENSION AQUEUSE A BASE DE SULFATE DE CALCIUM**
VERFAHREN ZUR HERSTELLUNG VON WÄSSRIGE SUSPENSIONEN VON CALCIUMSULFAT
METHOD FOR PREPARING AN AQUEOUS CALCIUM SULPHATE-BASED SUSPENSION

(30) Priorité: 02.08.1991 BE 9100718
(43) Date de publication de la demande: 05.04.1995
(73) Titulaire: PRAYON-RUPEL TECHNOLOGIES, 4480 Engis (BE)
(72) Inventeur: GUIDI, Tomizio, B-4100 Seraing (BE); SART, Michel, B-4480 Engis (BE)
(74) Mandataire: Callewaert, Jean
(86) Numéro de dépôt international: BE9200031
(87) Numéro de publication internationale: WO9302963

(56) Documents cités:
- EP-A- 0 278 880
- EP-A- 0 339 310
- EP-A- 0 366 569
- EP-A- 0 412 027
- GB-A- 2 032 901
- GB-A- 2 034 729
- US-A- 2 727 837

## Description

La présente invention se rapporte à un procéde de préparation d'une suspension aqueuse à base de sulfate de calcium notamment destiné à être utilisé en tant que charge de masse ou pigment de couchage dans la fabrication de papier, suivant lequel on forme une bouillie de sulfate de calcium en mettant en oeuvre au moins un premier additif régulateur de viscosité contenant un copolymére obtenu à partir de monomères éthyléniques d'au moins deux types différents, dont un premier comprend des monomères éthyléniques à fonction phosphatée ou phosphonée.

La fabrication d'acide phosphorique par attaque sulfurique d'un phosphate naturel entraîne la précipitation de sulfate de calcium hydraté communément appelé phosphogypse : la production d'une tonne de P₂O₅ conduit à la production de plus de 4 tonnes de phosphogypse. Actuellement, la production mondiale d'acide phosphorique conduit à la production annuelle de plus de 100 millions de tonnes de phosphogypse.

Présentement, une faible partie de celui-ci est rentabilisée dans l'industrie du bâtiment et en agriculture, la majeure partie devant être mise en décharge sur des aires de déversement ou rejetée dans les embouchures de fleuves ou en mer. Ces pratiques engendrent des nuisances écologiques. En conséquence, divers efforts sont faits en vue de trouver de nouveaux secteurs dans lesquels ce produit peut être recyclé.

A cet égard, il est connu, notamment pour l'industrie papetière, de mettre en suspension aqueuse du sulfate de calcium. L'industrie papetière demande des suspensions stables, c'est-à-dire qui ne décantent pas, et à forte teneur en matières solides, notamment pour des raisons de coûts de transport. De plus, lesdites suspensions aqueuses doivent être suffisamment fluides afin de permettre une manipulation aisée et, le cas échéant, elles doivent être compatibles avec des suspensions d'autres charges de masse ou pigments de couchage lors de leur mise en oeuvre en papeterie.

De nombreuses tentatives ont été faites pour augmenter la teneur en matières solides des suspensions tout en maintenant la viscosité dans des valeurs limites.

Il s'est avéré qu'en l'absence d'un additif régulateur de viscosité, on ne pouvait atteindre la teneur en matières solides demandée par l'industrie papetière dans les suspensions. Il s'est avéré également que lesdites suspensions ne sont pas suffisamment stables car le sulfate de calcium sédimente partiellement.

On préconise dans la demande de brevet européen 366.569 l'utilisation d'un agent régulateur de viscosité complexe, à savoir des copolymères composés de deux ou trois types de monomères éthyléniques. Un premier type de monomères qui est obligatoirement présent dans le copolymère, comprend des monoméres éthyléniques à fonction phosphatée ou phosphonée. Le deuxième et le troisième type, dont au moins un doit être présent dans le copolymère, comprennent respectivement des monomères éthyléniques à fonction carboxylique et des monomères éthyléniques du type esters ou substitués. Ces copolymères permettent d'obtenir des suspensions de sulfate de calcium assez stables présentant un taux relativement élevé de matières solides. L'inconvénient lors de l'utilisation de ces copolymères coûteux, réside dans le fait que les quantités requises de ceux-ci sont telles que le procédé s'avère peu économique. De plus, il est bien connu de l'homme de métier que la mise en oeuvre de quantités élevées de copolymères affecte défavorablement la blancheur des pigments. Par ailleurs, un autre inconvénient de l'utilisation de telles quantités de copolymères dans les charges de masse ou les pigments de couchage à base de sulfate de calcium réside dans le fait que ces quantités élevées peuvent perturber l'équilibre général du procédé papetier : d'une part, dans les pigments de couchage, cet équilibre général est perturbé lors des opérations de recyclage du vieux papier ou des rebuts de fabrication couchés avec de tels pigments, d'autre part, le procédé papetier est directement perturbe par l'incorporation de charges de masse riche en copolymères. Il y a par conséquent un problème posé par la nécessité de respecter pour ces suspensions de sulfate de calcium les teneurs en matières solides et les viscosités exigées par les papetiers.

L'invention a pour but de remédier à ce problème. A cette fin, suivant l'invention on ajoute en plus dudit premier additif régulateur de viscosité, comprenant en particulier un copolymère suivant la demande de brevet européen 366.569, un deuxième additif régulateur de viscosité comprenant un phosphate ou un polyphosphate d'un métal alcalin, la quantité ajoutée d'additif régulateur de viscosité étant telle que la viscosité soit comprise entre 250 et 2500 mPa.s mesurée à 100 RPM, de préférence entre 500 et 2000 mPa.s et que la concentration soit comprise entre 60 et 77 % de matières solides, de préférence entre 66 et 72 %.

Ainsi, grâce à la combinaison desdits premier et deuxième additifs régulateur de viscosité d'utilisation séparée bien connue, on peut maîtriser parfaitement la viscosité et la teneur en matières solides lors du traitement du sulfate de calcium. Par ailleurs, une suspension présentant une teneur en matières solides élevée réduit la quantité en eau contenue dans celle-ci et réduit les frais de transport. Le procédé est également rendu plus économique par la faible consommation d'additif régulateur de viscosité.

Suivant une forme de réalisation préférentielle de l'invention, on ajoute un troisième additif régulateur de viscosité contenant un éther cellulosique, en particulier carboxyméthylcellulose et/ou hydroxyéthylcellulose.

L'addition d'un éther cellulosique présente en outre l'avantage de ne pas engendrer de collage intempestif et surtout d'être non ionique et de permettre ainsi un recyclage de papier ultérieur particulièrement commode.

Les suspensions de sulfate de calcium ainsi obtenues intéressent notamment l'industrie papetière qui exige pour les charges de masse et les pigments de couchage des particules présentant une grande finesse afin d'obtenir des caractéristiques satisfaisantes d'opacité, de blancheur et de brillant du papier et, le cas échéant, un bon rendu des encres. Il s'est en outre avéré qu'en l'absence d'un additif régulateur de viscosité, on ne pouvait atteindre la finesse exigée compte tenu de la grande viscosité des suspensions comme décrit dans le brevet US 4,310,360. A cette fin, suivant une forme de réalisation avantageuse de l'invention, on soumet ladite bouillie à une opération de broyage humide et on ajoute pendant cette opération au moins une partie dudit additif régulateur de viscosité de manière à obtenir une granulométrie moyenne du sulfate de calcium broyé comprise entre 0,8 et 10 µm. D'une part, si on utilise le sulfate de calcium précité en tant que charge de masse, on ajoute lors du broyage humide au moins une partie dudit additif régulateur de viscosité de manière à obtenir une granulométrie moyenne du sulfate de calcium broyé comprise de préférence entre 3 et 9 µm et de préférence encore entre 5 et 7 µm. D'autre part, si on utilise le sulfate de calcium précité en tant que pigment de couchage, on ajoute lors du broyage humide au moins une partie dudit additif régulateur de viscosité de manière à obtenir une granulométrie moyenne du sulfate de calcium broyé comprise entre 0,9 et 3 µm et de préférence entre 1,3 et 2 µm. Ainsi, grâce au broyage, on peut atteindre aisément les finesses requises. Il a en outre été constaté que ces finesses ont pu être obtenues de manière économique.

Suivant une forme de réalisation avantageuse de l'invention, ledit premier additif régulateur de viscosité, contenant le copolymère, est ajouté en plusieurs fois en fonction de la viscosité de la bouillie de sulfate de calcium. Cela permet de maintenir la viscosité à un niveau acceptable tout au long du broyage humide. De plus, en ajoutant progressivement le copolymère, on en évite la surconsommation, laquelle affecterait défavorablement la blancheur des pigments. Cet effet est également obtenu par le fait que le copolymère précité est ajouté séparément par rapport aux autres additifs régulateur de viscosité et en particulier par rapport au deuxième additif régulateur de viscosité, par exemple en introduisant le copolymère le plus tard possible lors du broyage. En opérant de cette manière, on minimise la consommation de copolymère et on rend ainsi le procédé encore plus économique.

Avantageusement, on ajuste le pH de la bouillie de sulfate de calcium de façon à mesurer sur des bouillies diluées à l'aide d'eau distillée et amenées à 10 % en poids de matières solides des pH compris entre 7 et 12, de préférence entre 7,5 et 10, de préférence encore entre 8 et 9. Ainsi on minimise la quantité d'additif régulateur de viscosité mise en oeuvre pour le broyage.

Suivant une forme de réalisation spécifique de l'invention, on ajuste le pH par addition à la bouillie de sulfate de calcium, d'une base alcaline, de préférence de la soude caustique.

Suivant une forme de réalisation particulière de l'invention, on réalise l'opération de broyage à l'aide de billes, notamment des billes de verre, dans un broyeur suivant une quantité comprise entre 50 % et 90 % en volume, de préférence entre 75 % et 85 % en volume par rapport au volume utile du broyeur. On augmente ainsi l'efficacité du broyage tout en utilisant des billes inertes permettant d'éviter l'altération de la blancheur.

Suivant une autre forme de réalisation de l'invention, on soumet la bouillie de sulfate de calcium à une flottation, de préférence avant le broyage de celle-ci. La flottation en soi est déjà connue et, à elle seule, elle ne permet pas d'atteindre un degré de blancheur suffisant. Toutefois, appliquée en association avec le broyage, elle permet par l'enlèvement des matières organiques qu'elle entraîne, d'obtenir un plus haut degré de blancheur après broyage. Cet effet est encore augmenté lorsqu'on met en oeuvre au cours de la flottation, un agent moussant et qu'on collecte les mousses ainsi produites par la mise en oeuvre d'un agent collecteur.

Suivant encore une autre forme de réalisation de l'invention, on soumet la bouillie de sulfate de calcium à un hydrocyclonage, de préférence avant le broyage et de préférence encore avant la flottation. L'hydrocyclonage en soi est également connu et à lui seul, il ne permet pas d'atteindre un degré de blancheur suffisant. L'opération d'hydrocyclonage permet cependant d'augmenter l'efficacité du broyage en resserrant la fourchette granulométrique et permet également d'augmenter la blancheur.

D'autres particularités et avantages de la présente invention ressortiront de la description de quelques exemples de réalisation du procédé suivant l'invention illustré à l'aide des dessins annexés. Les lettres de référence se rapportent aux différentes phases représentées du procédé.

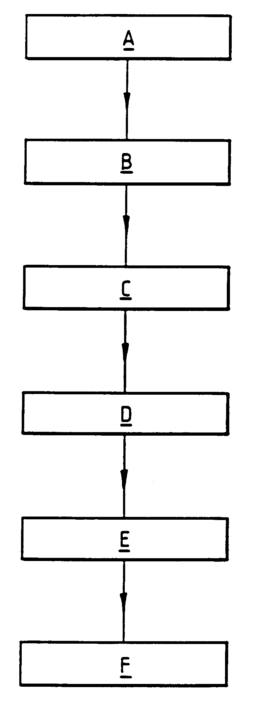

La figure unique est un schéma fonctionnel représentant les étapes successives du procédé suivant l'invention.

La présente invention concerne la production d'une suspension de sulfate de calcium finement broyé et à haute teneur en matières solides au départ de gypses provenant de procédés industriels ou au départ de gypses naturels en vue de leur utilisation comme charge ou pigment.

Le procédé suivant l'invention peut être appliqué à des sulfates de calcium tels que le phosphogypse, le sulfogypse produit lors de la désulfuration des fumées de centrales thermiques, le titanogypse produit lors de la fabrication du dioxyde de titane, les gypses co-produits lors des fabrications d'acides citrique, borique, tartrique et oxalique, et les gypses naturels lorsqu'il y a intérêt à se débarrasser partiellement ou totalement de certaines impuretés organiques ou minérales que ces sulfates de calcium contiennent et qu'il y a lieu, le cas échéant, de les blanchir.

Le procédé suivant l'invention est ici appliqué au phosphogypse.

Ce dernier sortant d'une unité de production d'acide phosphorique est débarrassé partiellement lors d'une première étape A du procédé de certaines impuretés hydrosolubles qu'il contient, telles que l'acidité libre, des composés fluorés, des sels minéraux et des composés organiques. En effet, au-delà d'une concentration déterminée, ces impuretés le rendent impropre à une utilisation comme charge et pigment minéral, en papeterie en particulier.

Le phosphogypse sortant d'une unité d'acide phosphorique à double cristallisation hémihydratedihydrate dans l'exemple donné ci-après présente les caractéristiques chimiques et physiques suivantes :
- pH d'une solution à 10 % de matières solides : 2 à 4
- % P₂O₅ total : 0,2 à 0,5
- % P₂O₅ soluble dans l'eau : 0,04 à 0,2
- % F : 0,2 à 0,6
- % Na₂O : 0,1 à 0,3
- % SiO₂ : 1,0 à 1,8
- % C total : 0,2 à 0,4
- granulométrie pondérale déterminée ainsi que les suivantes, par exemple, au granulomètre à laser de marque MALVERN MASTERSIZER, après dispersion aux ultrasons pendant 15 minutes dans du méthanol
   supérieure à 212 microns : 2 à 5 %
   supérieure à 150 microns : 10 à 25 %
   supérieure à 106 microns : 25 à 40 %
   supérieure à 45 microns : 55 à 70 %
   supérieure à 20 microns : 80 à 90 %
- diamètre moyen noté ci-après d50 : 50 à 80 microns.
- indice de blancheur TAPPI : 45 à 52, cet indice ainsi que les suivants sont mesures au moyen de l'appareil Elrepho de Zeiss à une longueur d'ondes de 457 nanomètres en prenant le sulfate de baryum comme étalon.

L'épuration préliminaire du phosphogypse est réalisée d'abord dans une deuxième étape B du procédé par tamisage humide de façon à écarter au moyen d'un tamis la fraction granulométrique la plus grossière, soit la fraction supérieure à 0,25 mm, et ensuite, dans une troisième étape C du procédé, par hydrocyclonage afin d'écarter les fractions granulométriques extrémes, soit les fractions supérieures à 60 à 120 microns et inférieures à 10 à 25 microns.

On obtient ainsi un gypse épuré ayant les caractéristiques suivantes :
- pH d'une solution à 10 % en matières solides : 4 à 5
- % P₂O₅ total : 0,1 à 0,4
- % P₂O₅ soluble dans l'eau : 0,01 à 0,02
- % F : 0,1 à 0,3
- % Na₂O : 0,05 à 0,2
- % SiO₂ : 0,4 à 1,0
- % C total : 0,05 à 0,1
- granulométrie :
   supérieure à 212 microns : 0 à 1 %
   supérieure à 150 microns : 3 à 10 %
   supérieure à 106 microns : 10 à 20 %
   supérieure à 45 microns : 45 à 65 %
   supérieure à 20 microns : 90 à 95 %
- d50 : 40 à 60 microns.
- indice de blancheur TAPPI : 68 à 72.

Ce gypse ne convient pas comme tel en papeteries où il faut atteindre au moment de la mise en oeuvre dans les sauces de couchage à base de gypse, un indice de blancheur TAPPI supérieur à 87 et une finesse de particules inférieure à 5 microns.

Pour blanchir le gypse, on fait suivre l'hydrocyclonage précité par une opération de flottation lors d'une quatrième étape D du procédé suivant l'invention.

L'industrie papetière exige pour les pigments de couchage à base de sulfate de calcium des finesses de 90 % inférieures à 5 microns et de 50 % inférieures à 2 microns, lesdites finesses étant mesurées par exemple au granulomètre à laser MALVERN, afin d'obtenir notamment des caractéristiques satisfaisantes d'opacité, de blancheur, de brillance du papier et un bon rendu des encres. A cette fin, le sulfate de calcium épuré dans les étapes du procédé précitées est mis en suspension aqueuse puis broyé en continu, respectivement au cours d'une cinquième étape E et sixième étape F du procédé. Cela se fait par exemple dans un broyeur à microbilles. Celles-ci présentent un diamètre compris par exemple entre 0,4 et 3 mm et sont de préférence en une matière inerte, par exemple en verre. Les billes choisies seront d'autant plus petites que le gypse doit être broyé plus finement.

Le procédé suivant l'invention est illustré dans les exemples ci-après :

### Exemple 1

Cet exemple est destiné à illustrer l'objet de l'invention concernant l'épuration et le blanchiment, à savoir : le traitement du sulfate de calcium par flottation D après hydrocyclonage C. On notera ici que l'on peut également suivant l'invention procéder à la flottation D avant l'hydrocyclonage C. Dans le cas de sulfate de calcium obtenu lors de la production d'acide phosphorique au départ de phosphate Kouribga, le sulfate de calcium (étape A) présente les caractéristiques suivantes :
- pH d'une solution à 10 % en matières solides : 2,8
- % P₂O₅ total : 0,42
- % F : 0,34
- % Na₂O : 0,23
- % SiO₂ : 1,34
- % C total : 0,27
- granulométrie :
   supérieure à 212 microns : 3,6 %,
   supérieure à 150 microns : 14,2 %,
   supérieure à 106 microns : 30,7 %,
   supérieure à 45 microns : 63,2 %,
   supérieure à 20 microns : 86,2 %
- d50 : 62,8 microns
- indice de blancheur TAPPI : 48,6.

Le sulfate de calcium ci-dessus est débarrassé des impuretés et des matières organiques qu'il contient par tamisage, hydrocyclonage et flottation (étapes B, respectivement C et D). Ainsi, le phosphogypse coproduit dans l'unité de production d'acide phosphorique est alimenté en suspension aqueuse sur un tamis de façon à écarter les particules de diamètre supérieur (étape B) à 700 microns. Le passant va dans l'installation d'hydrocyclonage (étape C) qui comporte deux étages. Ainsi, on alimente dix tonnes par heure de sulfate de calcium dans le premier étage de l'installation d'hydrocyclonage sous forme d'une suspension à 25 % de matières solides pour écarter les particules dépassant 100 microns en diamètre. On en récupère 7,5 tonnes par heure de sulfate de calcium sous forme d'une suspension à 16 % de matières solides que l'on alimente au deuxième étage de l'installation d'hydrocyclonage pour écarter les particules inférieures en diamètre à 20 microns. Cela permet de réduire la gamme de particules à broyer ultérieurement et de rendre ainsi l'opération de broyage plus efficace. On en récupère 6,2 tonnes par heure de sulfate de calcium ayant les caractéristiques suivantes :
- pH d'une solution à 10 % en matières solides : 4,6
- % P₂O₅ total : 0,29
- % F : 0,23
- % Na₂O : 0,12
- % SiO₂ : 0,62
- % C total : 0,07 ± 0,005
- granulométrie :
   supérieure à 212 microns : 0,6 %,
   supérieure à 150 microns : 4,6 %,
   supérieure à 106 microns : 12,6 %,
   supérieure à 45 microns : 49,2 %,
   supérieure à 20 microns : 92,8 %
- d50 : 44,1 microns
- indice de blancheur TAPPI : 70,7.

L'indice de blancheur est déterminé ici sur le sulfate de calcium avant l'opération de broyage. Cet indice augmente d'environ 10 points lors du broyage jusqu'à la finesse requise en papeterie.

Le sulfate de calcium hydrocycloné sous forme d'une suspension à 40-45 % de matières solides est alimenté dans une installation de flottation sous forme d'une batterie de cinq cellules de flottation de 1500 litres chacune travaillant avec une forte agitation et injection d'air de façon à écarter dans les mousses les particules indésirables. En cours de flottation, on ajoute en tant qu'agent moussant le méthylisobutylcarbinol (MIBC) à raison de 50 grs par tonne de sulfate de calcium. On élimine ainsi 2 à 4 % de solides dans les écumes.

Le sulfate de calcium sortant ainsi de l'installation de flottation sous forme d'une suspension à 40-45 % de matières solides, est filtré, dans une cinquième étape E du procédé, sur un filtre, par exemple un filtre à tambour sous vide. On obtient ainsi un gâteau de filtration à 70-83 % de matières solides.

Le phosphogypse épuré présente alors les caractéristiques suivantes :
- pH en suspension à 10 % de matières solides : 7
- % carbone total : 0,01 ± 0,005
- indice de blancheur TAPPI : 77,2.

### Exemple 2

Cet exemple est destiné à illustrer l'état de la technique concernant la préparation par dispersion de suspensions de sulfate de calcium d'origines différentes. Les caractéristiques et les résultats obtenus sont renseignés dans le tableau 1 ci-dessous.

**Tableau 1**

| Nature du sulfate de calcium | Concentration en mat. solid. de la susp.% (*) | Finesse des particules d50µm | Ajout de CoAANA(**) matière active %sec/sec | Viscosité BROOKFIELD 100 RPM-mPa.s |
|---|---|---|---|---|
| Phosphogypse | 68 | 44,9 | 0,1 | 900 |
| Phosphogypse prébroyé | 68 | 15,3 | 0,1 | 1.320 |
| Sulfogypse | 68 | 43,5 | 0,1 | 820 |
| Sulfogypse prébroyé | 68 | 15,6 | 0,1 | 1.250 |
| Gypse naturel | 68 | 43,7 | 0,1 | 620 |
| Gypse naturel prébroyé | 68 | 14,9 | 0,1 | 1.050 |

| | | | | |
|---|---|---|---|---|
| (*) Déterminée par séchage jusqu'à poids constant en étuve à 50°C. | | | | |
| (**) CoAANa : copolymère éthylénique neutralisé à la soude. | | | | |

Les essais de dispersion ont été effectués en laboratoire dans un bécher de un litre muni d'un couvercle pour empêcher l'évaporation en cours d'essai. Ce bêcher est pourvu d'une turbine de laboratoire de 65 mm de diamètre tournant par exemple à 2000 tours/minute.

On verse l'eau servant de fond de cuve de dispersion et on y ajoute le sulfate de calcium.

Un additif régulateur de viscosité, à savoir un copolymère, est introduit à raison de 0,1 % en poids de matières actives par rapport au sulfate au calcium, dans le fond de cuve, enfin on ajoute le sulfate de calcium. On ajuste le pH de la suspension par addition d'une base alcaline, en particulier de la soude caustique de façon à maintenir un pH à 10 % de matières solides de 8,5 ± 0,1. La durée de la dispersion est d'une heure. Dans le tableau 1 ci-dessus sont représentées chacune des finesses de particules exprimées en diamètre moyen, noté d50, et des viscosités Brookfield en mPa.s à 100 tours/min chaque fois pour un type de sulfate de calcium différent présent à raison d'une concentration constante de la suspension exprimée en % de matières solides et à un taux constant de copolymère éthylénique neutralisé à la soude exprimé en % de matière active et désigné dans le tableau ci-dessus ainsi que ci-après par CoAANa. Par matière active il faut entendre le copolymère à l'état pur.

### Exemple 3

Cet exemple est destiné à illustrer l'objet de l'invention, concernant la préparation par dispersion d'une suspension de sulfate de calcium épuré et blanchi obtenu dans l'exemple 1 ci-dessus avec adjonction de polyphosphate suivi d'adjonction d'une faible quantité de copolymère. Cet exemple est illustré par le tableau 2 ci-dessous.

**Tableau 2**

| Nature du sulfate de calcium | Concentration en matières solides de la suspension % | Finesse des particules d50 µm | Ajout Polyphosphate %sec/sec sec/sec | Ajout CoAANa matière active % | Viscosité BROOKFIELD 100 RPM -mPa.s |
|---|---|---|---|---|---|
| Phosphogypse épuré et blanchi obtenu dans l'exemple 1 | 68 | 45,2 | 0,0 | 0,1 | 780 |
| | 68 | 45,2 | HMP 0,25 | 0,1 | 660 |
| | 68 | 45,2 | SAPP 0,25 | 0,1 | 680 |
| | 68 | 45,2 | STPP 0,1 | 0,1 | 870 |
| | 68 | 45,2 | STPP 0,25 | 0,1 | 400 |
| | 68 | 45,2 | STPP 0,50 | 0,1 | 480 |
| | 68 | 45,2 | STPP 0,75 | 0,1 | 760 |
| | 68 | 45,2 | STPP 1,0 | 0,1 | 850 |
| | 68 | 45,2 | STPP 0,25 | 0,0 | 1.320 |
| | 70 | 45,2 | 0,0 | 0,1 | 950 |
| | 70 | 45,2 | STPP 0,25 | 0,1 | 620 |
| | 63 | 45,2 | 0,0 | 0,1 | 430 |
| | 63 | 45,2 | STPP 0,25 | 0,1 | 350 |
| Phosphogypse prébroyé | 68 | 15,1 | 0,0 | 0,1 | 1.020 |
| | 68 | 15,1 | STPP 0,25 | 0,1 | 680 |
| où les abréviations utilisées sont expliquées ci-après : d50 : diamètre moyen de la distribution pondérale des particules. CoAANa : copolymère éthylénique neutralisé à la soude. HMP : polyphosphate sous forme de NaPO₃ (hexamétaphosphate de rapport molaire Na/P = 1). STPP : polyphosphate sous forme de Na₅P₃O₁₀ (tripolyphosphate de sodium rapport molaire Na/P = 1,66). SAPP : polyphosphate sous forme de Na₂H₂P₂O₇ (pyrophosphate d'acide de sodium de rapport molaire Na/P = 1). | | | | | |

La dispersion est réalisée suivant le mode opératoire décrit dans l'exemple 2. Il ressort du tableau 2 ci-dessus que la mise de STPP jusque 0,75 % par tonne de phosphogypse sec, toute autre condition étant égale, permet de réduire de manière efficace la viscosité des suspensions. Il ressort en outre du tableau 2 ci-dessus que lors de l'utilisation de HMP ou de SAPP, d'ailleurs plus coûteux que le STPP, on n'obtient pas une efficacité plus grande qu'avec l'utilisation de STPP, toute autre condition restant égale. D'autre part, il ressort que pour une concentration en matières solides de la suspension supérieure, respectivement inférieure, la viscosité obtenue est supérieure, respectivement inférieure, toute autre condition restant égale.

On notera également qu'en l'absence de CoAANa, toute autre condition restant égale, la viscosité obtenue est très nettement supérieure.

### Exemple 4

Cet exemple est destiné à illustrer l'état de la technique et concerne le broyage des suspensions de sulfate de calcium de différentes origines sans adjonction de polyphosphate et uniquement avec du copolymère. Les caractéristiques des suspensions et les finesses obtenues après broyage sont reprises dans le tableau 3 ci-dessous.

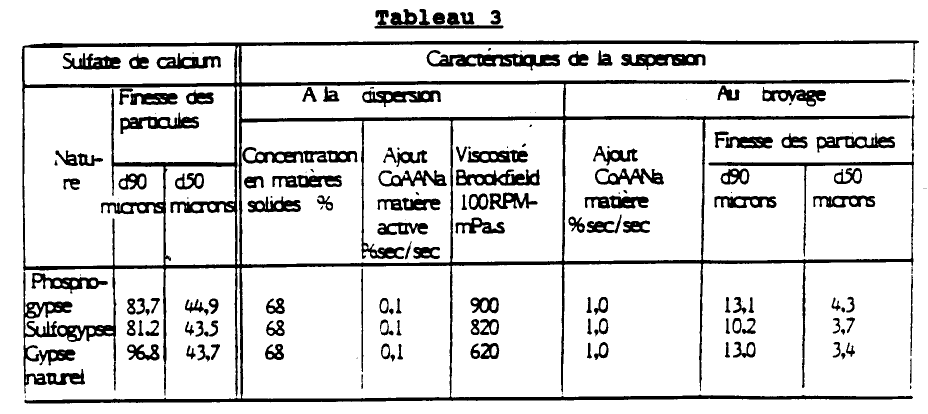

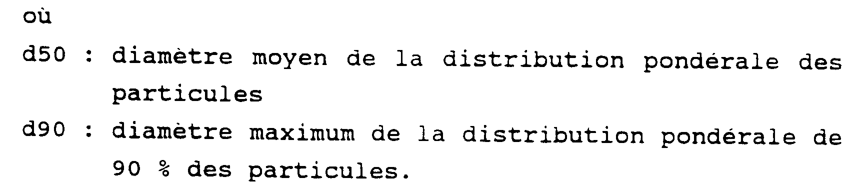

La suspension de sulfate de calcium préparée suivant le mode opératoire de l'exemple 2, est introduite dans un broyeur à microbilles d'un volume utile de 0,6 litre. Il est entendu qu'il faut comprendre par volume utile du broyeur le volume de celui-ci après soustraction du volume des pièces du broyeur contenues dans le volume interne de celui-ci, telles que l'agitateur. Celui-ci comprend par exemple une charge de billes en matière inerte, en verre, présentant un diamètre compris entre 1,0 et 1,6 mm, d'un poids d'environ 1,2 kg et d'un volume d'environ 0,42 litre. Afin de permettre la séparation des billes de broyage et de la suspension de sulfate de calcium broyé, le broyeur est muni d'une cartouche tamisante d'environ 300 microns.

L'opération de broyage débute sans mise en oeuvre d'additif de régulation de viscosité. Celle-ci débute seulement lorsque la suspension s'épaissit; elle se poursuit jusqu'à consommation de 1 % en poids de matière active par rapport au poids de sulfate de calcium. On ajuste le pH de la suspension par addition d'une base alcaline, par exemple du NaOH, de façon à maintenir un pH à 10 % de matières solides d'environ 8,4 ± 0,1. Le broyage est arrêté lorsque la viscosité de la suspension de sulfate de calcium broyé est proche du figeage.

### Exemple 5

Cet exemple est destiné à illustrer l'objet de l'invention et il concerne le broyage de suspensions de sulfate de calcium épuré et blanchi obtenu dans l'exemple 1. Le polyphosphate est ajouté à la dispersion et le copolymère est ajouté au broyage. Les caractéristiques et les résultats obtenus sont mentionnés dans le tableau 4 ci-dessous.

**Tableau 4**

| Nature du sulfate de calcium | Caractéristiques de la suspension | | | | | |
|---|---|---|---|---|---|---|
| | A la dispersion | | Au broyage | | | |
| | Concentration en matières solides % | Ajout STPP %sec/sec | Ajout CoAANa matière active %sec/sec | pH à 10% dematières solides | Finesse des particules | |
| | | | | | d90 microns | d50 microns |
| Phosphogypse épuré et blanchi obtenu dans l'exemple 1. | 68 | 0.0 | 1.0 | 7.4±0.1 | 9.49 | 3.52 |
| | 68 | 0.25 | 1.0 | 7.4±0.1 | 4.38 | 2.03 |
| | 68 | 0.5 | 1.0 | 7.4±0.1 | 4.25 | 1.88 |
| | 68 | 1.0 | 1.0 | 7.4±0.1 | 4.62 | 2.02 |
| | 68 | 2.0 | 1.0 | 7.4±0.1 | 7.57 | 2.61 |
| | 68 | 0.0 | 1.0 | 8.5±0.1 | 8.06 | 3.18 |
| | 68 | 0.25 | 1.0 | 8.5±0.1 | 2.96 | 1.30 |
| | 68 | 0.5 | 1.0 | 8.5±0.1 | 3.84 | 1.54 |
| | 68 | 1.0 | 1.0 | 8.5±0.1 | 4.60 | 1.80 |
| | 68 | 2.0 | 1.0 | 8.5±0.1 | 4.37 | 1.81 |
| | 68 | 0.25 | 1.0 * | 8.5±0.1 | 3.88 | 1.62 |

| | | | | | | |
|---|---|---|---|---|---|---|
| * La totalité du CoAANa est introduite au début du broyage. | | | | | | |

Il ressort du tableau ci-dessus que pour une adjonction de CoAANa de 1 % dans chaque cas, l'adjonction complémentaire de STPP permet d'obtenir des granulométries plus fines et la finesse maximale est obtenue pour une quantité de STPP exprimée en % sec/sec proche de 0,25 à 0,5 %. Il apparaît également que l'augmentation du pH ajusté, par exemple par une addition de soude caustique, améliore encore le rendement de broyage, toute autre condition restant égale. La dispersion et le broyage sont réalisés suivant les modes opératoires décrits respectivement dans les exemples 2 et 4.

### Exemple 6

Cet exemple est destiné à illustrer l'objet de l'invention et concerne le broyage de suspensions de sulfate de calcium épuré et blanchi obtenu dans l'exemple 1. Cet exemple est illustré à l'aide du tableau 5 ci-dessous.

**Tableau 5**

| Nature du sulfate de calcium | Caractéristiques de la suspension | | | | | | |
|---|---|---|---|---|---|---|---|
| | A la dispersion | | | Au broyage | | | |
| | Concentration en matières solides % | Ajout CMC %sec/sec | Ajout STPP %sec/sec | Ajout CoAANa mat.active %sec/sec | pH à 10 % de mat. solides | Finesse des particules | |
| | | | | | | d 90 microns | d 50 microns |
| Phosphogypse épuré et blanchi obtenu dans l'exemple 1 | 68 | 1.0 | 0.25 | 0.0 | 8.5±0.1 | 4.0 | 1.9 |
| | 68 | 0.1 | 0.25 | 1.0 | 8.5±0.1 | 2.4 | 1.0 |

Il ressort du tableau ci-dessus que l'addition de carboxyméthylcellulose (CMC) à faible poids moléculaire lors de la dispersion du sulfate de calcium permet, toute autre condition restant égale, d'encore améliorer le rendement du broyage; il suffit à cet égard de comparer les diamètres moyens notés d50 exprimés en microns repris dans les tableaux 4 et 5. La dispersion et le broyage sont réalisés suivant les modes opératoires décrits respectivement dans les exemples 2 et 4.

### Exemple 7

Dans cet exemple, qui est illustré à l'aide du tableau 6 ci-dessous, on ajoute de l'hydroxyéthylcellulose lors de la dispersion du sulfate de calcium. Celle-ci permet également, toute autre condition restant égale, d'améliorer davantage le rendement du broyage, ainsi qu'il apparait par comparaison des valeurs de d50 reprises dans les tableaux 5 et 6. La dispersion et le broyage sont réalisés suivant les modes opératoires décrits dans les exemples 2 et 4.

**Tableau 6**

| Nature du sulfate de calcium | Caracteristiques de la suspension | | | | | | |
|---|---|---|---|---|---|---|---|
| | A la dispersion | | | Au broyage | | | |
| | Concentration en matières solides % | Ajout HEC %sec/sec | Ajout STPP %sec/sec | Ajout CoAANa matière active % sec/sec | pH à 10% de mat. solides | Finesse des particules | |
| | | | | | | d90 microns | d50 microns |
| Phosphogypse épuré et blanchi obtenu dans l'exemple 1 | 68 | 1.0 | 0.25 | 0.0 | 8.5±0.1 | 4.2 | 1.8 |
| | 68 | 0.1 | 0.25 | 1.0 | 8.5±0.1 | 2.4 | 0.9 |
| | 68 | 1.0 | 0.0 | 0.0 | 8.5±0.1 | 5.6 | 2.1 |

### Exemple 8

Contrairement aux exemples donnés jusqu'à présent et ayant trait à des essais de laboratoire, cet exemple est réalisé à l'échelle pilote. Il est destiné à illustrer suivant l'invention l'opération de dispersion et de broyage du sulfate de calcium épuré et blanchi de l'exemple 1. La dispersion de sulfate de calcium est réalisée suivant le mode opératoire décrit dans l'exemple 2 dans une cuve mélangeuse-disperseuse de marque CELLIER, type C3 de 350 litres. Le broyage de la suspension de sulfate de calcium se fait en continu suivant le mode opératoire décrit dans l'exemple 4, dans un broyeur de volume total de 25 litres contenant une charge de billes en verre, dont les diamètres sont compris entre 0,8 et 1,5 mm, d'un poids d'environ 48 kg et d'un volume d'à peu près 19 litres; les conditions de marche ont été fixées de la manière suivante :

### Dispersion :

- ajout de NaOH : 0,2 % sec/sec.
- ajout de STPP : 0,25 % sec/sec.
- concentration de la suspension : 69,6 %
- pH de la suspension à 10 % de matières solides : 8,4
- durée de la dispersion : une heure.

### Broyage :

- Le débit d'alimentation de la suspension et l'ajout de copolymère sont fonction de l'énergie consommée qui est fixée à 150 Kwh/tonne de sulfate de calcium.
- Température : 40 à 50°C
- Ajout de NaOH : 0,12 %
- Mise de copolymère : 1,1 %
- pH de la suspension à 10 % de matières solides : 8,4 ± 0,1

### Caractéristiques de la suspension de sulfate de calcium broyé :

- concentration en matières solides : 67,2 %
- granulométrie : d90 : 4,25 microns
   d50 : 1,88 micron
- viscosité : 1.060 mPa.s
Le pourcentage en volume des billes, par rapport au volume du broyeur étant compris entre 50 % et 90 %, de préférence entre 75 % et 85 %.

Par ailleurs, il s'est également avéré avantageux d'ajouter un biocide au cours du procédé suivant l'invention.

Il va de soi que l'invention n'est nullement limitée aux exemples décrits ci-dessus et que d'autres variantes peuvent être avancées sans sortir du cadre de la présente demande de brevet. Ainsi, par exemple, on peut faire précéder la filtration (étape E de la figure) de la bouillie de sulfate de calcium, d'un traitement de la suspension à l'ozone et/ou à l'eau oxygénée et/ou à l'oxygène. Dans le cas du phosphogypse, on ajoute de l'ozone à raison de 0,150 kg par tonne de gypse en milieu aqueux à un pH égal ou supérieur à 3. On obtient ainsi un degré de blancheur d'approximativement 82 après broyage.

Par ailleurs, le traitement de l'ozone peut être remplacé par ou combiné à un traitement en milieu acide au chlore, aux oxydes de chlore, notamment le dioxyde de chlore, ou à l'aide chlorique à un pH inférieur à 6, de préférence inférieur à 3, pour que les réactions puissent se réaliser et que les impuretés organiques colorées n'adhérent pas aux particules de sulfate de calcium.

De plus, on peut également mettre en oeuvre comme additif régulateur de viscosité supplémentaire un homopolymére, en particulier du polyacrylate, avantageusement à raison de 0,05 % à 2 % en poids, de préférence de 0,1 à 1 % en poids.

## Revendications

1. Procédé de préparation d'une suspension aqueuse à base de sulfate de calcium notamment destiné à être utilisé en tant que charge de masse ou pigment de couchage dans la fabrication de papier, suivant lequel on forme une bouillie de sulfate de calcium en mettant en oeuvre au moins un premier additif régulateur de viscosité contenant un copolymère obtenu à partir de monomères éthyléniques d'au moins deux types différents, dont un premier comprend des monomères éthyléniques à fonction phosphatée ou phosphonée, caractérisé en ce que l'on ajoute en plus un deuxième additif régulateur de viscosité comprenant un phosphate ou un polyphosphate d'un métal alcalin, la quantité ajoutée d'additif régulateur de viscosité étant telle que la viscosité soit comprise entre 250 et 2500 mPa.s mesurée à 100 RPM, de préférence entre 500 et 2000 mPa.s et que la concentration soit comprise entre 60 et 77 % de matières solides, de préférence entre 66 et 72 %.

2. Procédé suivant la revendication 1, caractérisé en ce que l'on ajoute un troisième additif régulateur de viscosité contenant un éther cellulosique, en particulier carboxyméthylcellulose et/ou hydroxyéthylcellulose.

3. Procédé suivant l'une ou l'autre des revendications 1 à 2, caractérisé en ce que l'on soumet ladite bouillie à une opération de broyage humide et en ce que l'on ajoute pendant cette opération au moins une partie dudit additif régulateur de viscosité, de manière à obtenir une granulométrie moyenne du sulfate de calcium broyé comprise entre 0,8 et 10 µm et, d'une part, si on utilise le sulfate de calcium précité en tant que charge de masse, de manière à obtenir de préférence une granulométrie moyenne du sulfate de calcium broyé comprise entre 3 et 9 µm, de préférence encore entre 5 et 7 µm et/ou, d'autre part, si on utilise le sulfate de calcium précité en tant que pigment de couchage, de manière à obtenir, de préférence une granulométrie moyenne du sulfate de calcium broyé comprise entre 0,9 et 3 µm, de préférence encore entre 1,3 et 2 µm.

4. Procédé suivant la revendication 3, caractérisé en ce que l'on ajoute au moins une partie et de préférence la quantité totale du deuxième additif régulateur de viscosité avant l'opération de broyage, notamment dans la bouillie sous forme d'une dispersion.

5. Procédé suivant l'une quelconque des revendications 3 et 4, caractérisé en ce que l'on ajoute au moins une partie et de préférence la quantité totale du premier additif régulateur de viscosité pendant l'opération de broyage.

6. Procédé suivant la revendication 5, caractérisé en ce que l'on ajoute ledit premier additif régulateur de viscosité en plusieurs étapes pendant l'opération de broyage en fonction de la viscosité de la bouillie de sulfate de calcium.

7. Procédé suivant l'une quelconque des revendications 1 à 6, caractérisé en ce que le deuxième type de monomères éthyléniques du copolymère du premier additif régulateur de viscosité comprend des monomères éthyléniques à fonction carboxylique et/ou des monomères éthyléniques du type esters ou substitués.

8. Procédé suivant l'une quelconque des revendications 1 à 7, caractérisé en ce que l'on ajuste le pH de la bouillie de sulfate de calcium de façon à mesurer sur des bouillies diluées à l'aide d'eau distillée et amenées à 10 % en poids de matières solides des pH compris entre 7 et 12, de préférence entre 7,5 et 10, de préférence encore entre 8 et 9.

9. Procédé suivant la revendication 8, caractérisé en ce qu'on ajuste le pH par addition à la bouillie de sulfate de calcium, d'une base alcaline, de préférence de la soude caustique.

10. Procédé suivant l'une quelconque des revendications 3 à 9, caracterisé en ce qu'on effectue l'opération de broyage à l'aide de billes, notamment des billes de verre, dans un broyeur suivant une quantité comprise entre 50 % et 90 % en volume, de préférence entre 75 % et 85 % en volume par rapport au volume utile du broyeur.

11. Procédé suivant la revendication 10, caractérisé en ce qu'on utilise des billes présentant un diamètre compris entre 0,1 mm et 3,5 mm, de préférence entre 0,8 mm et 2,5 mm et de préférence encore entre 1,2 et 2,2 mm.

12. Procédé suivant l'une quelconque des revendications 1 à 11, caractérisé en ce qu'on ajoute, comme polyphosphate alcalin, du tripolyphosphate de sodium.

13. Procédé suivant la revendication 12, caractérisé en ce qu'on ajoute du tripolyphosphate de sodium à raison de 0,05 % à 1,0 % en poids, de préférence de 0,2 % à 0,6 % en poids.

14. Procédé suivant l'une quelconque des revendications 1 à 13, caractérisé en ce qu'on ajoute du copolymère éthylénique à raison de 0,05 % à 1,8 % en poids, de préférence de 0,08 % à 1,5 % en poids et de préférence encore de 0,1 % à 1,1 % en poids de matière active.

15. Procédé suivant l'une quelconque des revendications 1 à 14, caractérisé en ce qu'on ajoute de la carboxyméthylcellulose ou de l'hydroxyéthylcellulose à raison de 0,05 % à 1 % en poids, de préférence de 0,1 % à 0,6 % en poids.

16. Procédé suivant l'une quelconque des revendications 1 à 15, caractérisé en ce qu'on ajoute de la carboxyméthylcellulose de sodium présentant une viscosité inférieure à 100 mPa.s pour 4 % en poids à une température de 25° C et un pH en solution à 1 % en poids compris entre 5 et 9, de préférence entre 6 et 8,5.

17. Procédé suivant l'une des revendications 1 à 3, caractérisé en ce que l'on ajoute de l'hydroxyéthylcellulose à raison de 0,05 à 1,8 %, de préférence de 0,1 à 1,5 % en poids, de préférence encore de 0,2 à 1,2 % en poids.

18. Procédé suivant l'une quelconque des revendications 1 à 17, caractérisé en ce qu'on soumet la bouillie de sulfate de calcium à une flottation, de préférence avant le broyage de celle-ci.

19. Procédé suivant la revendication 18, caractérisé en ce qu'on met en oeuvre, au cours de la flottation, un agent moussant destiné à produire des mousses et en ce qu'on collecte les mousses ainsi produites par la mise en oeuvre d'un agent collecteur.

20. Procédé suivant l'une quelconque des revendications 1 à 19, caractérisé en ce qu'on soumet la bouillie de sulfate de calcium à un hydrocyclonage, de préférence avant le broyage de celle-ci, de préférence encore avant la flottation.

21. Procédé de préparation d'une suspension aqueuse à base de sulfate de calcium, notamment destiné à être utilisé en tant que charge de masse ou pigment de couchage suivant l'une quelconque des revendications 1 à 20, caractérisé en ce qu'on soumet une bouillie de sulfate de calcium à des opérations combinées d'hydrocyclonage et de flottation, ces opérations étant éventuellement combinées à une opération de broyage.

22. Procédé suivant la revendication 21, caractérisé en ce que la flottation est suivie d'une filtration de la bouillie de sulfate de calcium, avant cette éventuelle opération de broyage.

23. Procédé suivant l'une ou l'autre des revendications 21 et 22, caractérisé en ce que l'hydrocyclonage est précédé d'un tamisage.

24. Procédé suivant l'une ou l'autre des revendications 22 et 23, caractérisé en ce que la filtration est précédée d'un traitement à l'ozone et/ou à l'eau oxygénée et/ou à l'oxygène et/ou au chlore, notamment par des oxydes de chlore, tels que du dioxyde de chlore et/ou des chlorates et/ou de l'acide chlorique.

25. Procédé suivant l'une quelconque des revendications 21 à 24, caractérisé en ce qu'on soumet la bouillie de sulfate de calcium à une étape d'hydrocyclonage de manière à écarter les particules de diamètre situé en deçà d'une valeur-seuil comprise entre 5 et 40 µm, de préférence entre 10 et 30 µm, et de préférence encore entre 18 et 22 µm.

26. Procédé suivant l'une quelconque des revendications 21 à 25, caractérisé en ce qu'on soumet la bouillie de sulfate de calcium à une étape d'hydrocyclonage de manière à écarter les particules au-delà d'une valeur-seuil comprise entre 50 et 150 µm, de préférence entre 80 et 120 µm, de préférence encore entre 95 et 105 µm.

## Claims

1. A process for preparation of an aqueous suspension based on calcium sulphate intended especially to be employed as bulk filler or coating pigment in paper manufacture, in accordance with which a calcium sulphate slurry is formed by using at least one first viscosity regulator additive containing a copolymer obtained from ethylenic monomers of at least two different types, a first one of which includes ethylenic monomers with a phosphate or phosphonate functional group, characterized in that in addition a second viscosity regulator additive including an alkali metal phosphate or polyphosphate is added, the added quantity of viscosity regulator additive being such that the viscosity is between 250 and 2500 mPa s measured at 100 rev/min, preferably between 500 and 2000 mPa s, and that the concentration is between 60 and 77 % of solid matter, preferably between 66 and 72 %.

2. A process in accordance with claim 1, characterized in that a third viscosity regulator additive containing a cellulose ether, in particular carboxymethylcellulose and/or hydroxyethylcellulose, is added.

3. A process in accordance with either of claims 1 and 2, characterized in that the said slurry is subjected to a wet grinding operation and in that during this operation at least a portion of the said viscosity regulator additive is added, so as to obtain a mean particle size of the ground calcium sulphate of between 0.8 and 10 µm and, on the one hand, if the abovementioned calcium sulphate is employed as bulk filler, so as to obtain preferably a mean particle size of the ground calcium sulphate of between 3 and 9 µm, more preferably between 5 and 7 µm and/or, on the other hand, if the abovementioned calcium sulphate is employed as coating pigment, so as to obtain, preferably, a mean particle size of the ground calcium sulphate of between 0.9 and 3 µm, more preferably between 1.3 and 2 µm.

4. A process in accordance with claim 3, characterized in that at least a portion and preferably the total quantity of the second viscosity regulator additive is added before the grinding operation, especially into the slurry in the form of a dispersion.

5. A process in accordance with either of claims 3 and 4, characterized in that at least a portion and preferably the total quantity of the first viscosity regulator additive is added during the grinding operation.

6. A process in accordance with claim 5, characterized in that the said first viscosity regulator additive is added in several stages during the grinding operation as a function of the viscosity of the calcium sulphate slurry.

7. A process in accordance with any one of claims 1 to 6, characterized in that the second type of ethylenic monomers of the copolymer of the first viscosity regulator additive includes ethylenic monomers with a carboxylic functional group and/or ethylenic monomers of the ester or substituted type.

8. A process in accordance with any one of claims 1 to 7, characterized in that the pH of the calcium sulphate slurry is adjusted so as to measure, on the slurries diluted with the aid of distilled water and brought to 10 % by weight of solid matter, pHs of between 7 and 12, preferably between 7.5 and 10, more preferably between 8 and 9.

9. A process in accordance with claim 8, characterized in that the pH is adjusted by addition of an alkaline base, preferably of caustic soda, to the calcium sulphate slurry.

10. A process in accordance with any one of claims 3 to 9, characterized in that the grinding operation is performed with the aid of beads, especially glass beads, in a mill in accordance with a quantity of between 50 % and 90 % by volume, preferably between 75 % and 85 % by volume relative to the working volume of the mill.

11. A process in accordance with claim 10, characterized in that beads exhibiting a diameter of between 0.1 mm and 3.5 mm, preferably 0.8 mm and 2.5 mm and more preferably between 1.2 and 2.2 mm are employed.

12. A process in accordance with any one of claims 1 to 11, characterized in that sodium tripolyphosphate is added as alkali metal polyphosphate.

13. A process in accordance with claim 12, characterized in that sodium tripolyphosphate is added in a proportion of 0.05 % to 1.0 % by weight, preferably of 0.2 % to 0.6 % by weight.

14. A process in accordance with any one of claims 1 to 13, characterized in that ethylenic copolymer is added in a proportion of 0.05 % to 1.8 % by weight, preferably of 0.08 % to 1.5 % by weight and more preferably of 0.1 % to 1.1 % by weight of active substance.

15. A process in accordance with any one of Claims 1 to 14, characterized in that carboxymethylcellulose or hydroxyethylcellulose is added in a proportion of 0.05 % to 1 % by weight, preferably of 0.1 % to 0.6 % by weight.

16. A process in accordance with any one of claims 1 to 15, characterized in that sodium carboxymethylcellulose exhibiting a viscosity lower than 100 mPa s at 4 % by weight at a temperature of 25°C and a pH in solution at 1 % by weight of between 5 and 9, preferably between 6 and 8.5, is added.

17. A process in accordance with one of claims 1 to 3, characterized in that hydroxyethylcellulose is added in a proportion of 0.05 to 1.8 %, preferably of 0.1 to 1.5 % by weight, more preferably of 0.2 to 1.2 % by weight.

18. A process in accordance with any one of claims 1 to 17, characterized in that the calcium sulphate slurry is subjected to a flotation, preferably before the latter is ground.

19. A process in accordance with claim 18, characterized in that a foaming agent intended to produce foams is used during the flotation and in that the foams thus produced are collected by the use of a collecting agent.

20. A process in accordance with any one of claims 1 to 19, characterized in that the calcium sulphate slurry is subjected to a hydrocycloning, preferably before it is ground, more preferably before the flotation.

21. A process for preparation of an aqueous suspension based on calcium sulphate, intended especially to be employed as bulk filler or coating pigment in accordance with any one of claims 1 to 20, characterized in that a calcium sulphate slurry is subjected to combined hydrocycloning and flotation operations, these operations being optionally combined with a grinding operation.

22. A process in accordance with claim 21, characterized in that the flotation is followed by a filtration of the calcium sulphate slurry before this optional grinding operation.

23. A process in accordance with either of claims 21 and 22, characterized in that the hydrocycloning is preceded by a screening.

24. A process in accordance with either of claims 22 and 23, characterized in that the filtration is preceded by a treatment with ozone and/or with aqueous hydrogen peroxide and/or with oxygen and/or with chlorine, especially with chlorine oxides such as chlorine dioxide and/or chlorates and/or chloric acid.

25. A process in accordance with any one of claims 21 to 24, characterized in that the calcium sulphate slurry is subjected to a stage of hydrocycloning so as to separate off the particles of diameter situated below a threshold value of between 5 and 40 µm, preferably between 10 and 30 µm and more preferably between 18 and 22 µm.

26. A process in accordance with any one of claims 21 to 25, characterized in that the calcium sulphate slurry is subjected to a stage of hydrocycloning so as to separate off their particles above a threshold value of between 50 and 150 µm, preferably between 80 and 120 µm, more preferably between 95 and 105 µm.

## Patentansprüche

1. Verfahren zur Herstellung einer wäßrigen Suspension auf der Basis von Calciumsulfat, das insbesondere zur Verwendung als Massefüllstoff oder Beschichtungspigment bei der Papierherstellung bestimmt ist, gemäß dem man einen Calciumsulfatbrei bildet, indem man wenigstens einen Viskositätsregelungs-Zusatz einsetzt, der ein Copolymer enthält, erhalten von Ethylenmonomeren wenigstens zwei verschiedener Arten, wobei eine erste Art Ethylenmonomere mit Phosphat- oder Phosphorfunktion aufweist, dadurch gekennzeichnet, daß man außerdem einen zweiten Viskositätsregelungs-Zusatz zufügt, der ein Phosphat oder ein Polyphosphat eines Alkalimetalls aufweist, wobei die zugefügte Menge des Viskositätsregelungs-Zusatzes derart ist, daß die Viskosität zwischen 250 und 2500 mPa.s, gemessen bei 100 Umdrehungen pro Minute, vorzugsweise zwischen 500 und 2000 mPa.s beträgt, und daß die Konzentration zwischen 60 und 77 % Feststoffe, vorzugsweise zwischen 66 und 72 % beträgt.

2. Verfahren nach Anspruch 1, dadurch gekennzeichnet, daß man einen dritten Viskositätsregelungs-Zusatz zufügt, der einen Celluloseether, insbesondere Carboxymethylcellulose und/oder Hydroxyethylcellulose enthält.

3. Verfahren nach Anspruch 1 oder 2, dadurch gekennzeichnet, daß man den Brei einem Naßmahlungsverfahren unterzieht, und daß man während dieses Verfahren wenigstens einen Teil des Viskositätsregelungs-Zusatzes zufügt, derart, daß man eine mittlere Kornklassierung des gemahlenen Calciumsulfats zwischen 0,8 und 10 µm erhält und, einerseits, wenn man das oben genannte Calciumsulfat als Massefüllstoff verwendet, derart, daß man vorzugsweise eine mittlere Kornklassierung des gemahlenen Calciumsulfats zwischen 3 und 9 µm, noch bevorzugter zwischen 5 und 7 µm erhält, und/oder, andererseits, wenn man oben das genannte Calciumsulfat als Beschichtungspigment verwendet, derart, daß man vorzugsweise eine mittlere Kornklassierung des gemahlenen Calciumsulfats zwischen 0,9 und 3 µm, noch bevorzugter zwischen 1,3 und 2 µm erhält.

4. Verfahren nach Anspruch 3, dadurch gekennzeichnet, daß man wenigstens einen Teil und vorzugsweise die Gesamtmenge des zweiten Viskositätsregelungs-Zusatzes vor dem Mahlungsverfahren, insbesondere dem Brei in Form einer Dispersion zufügt.

5. Verfahren nach einem der Ansprüche 3 und 4, dadurch gekennzeichnet, daß man wenigstens einen Teil und vorzugsweise die Gesamtmenge des ersten Viskositätsregelungs-Zusatzes während des Mahlungsverfahrens zufügt.

6. Verfahren nach Anspruch 5, dadurch gekennzeichnet, daß man den ersten Viskositätsregelungs-Zusatz in mehreren Stufen während des Mahlungsverfahrens in Abhängigkeit von der Viskosität des Calciumsulfatbreis zufügt.

7. Verfahren nach einem der Ansprüche 1 bis 6, dadurch gekennzeichnet, daß die zweite Art von Ethylenmonomeren des Copolymers des ersten Viskositätsregelungs-Zusatzes Ethylenmonomere mit Carboxylfunktion und/oder Ethylenmonomere vom Estertyp oder substituierte Ethylenmonomere aufweist.

8. Verfahren nach einem der Ansprüche 1 bis 7, dadurch gekennzeichnet, daß man den pH-Wert des Calciumsulfatbreis so einstellt, daß man, in mit destilliertem Wasser verdünnten und auf 10 Gew.-% Feststoff gebrachten Breien, pH-Werte zwischen 7 und 12, vorzugsweise zwischen 7,5 und 10, noch bevorzugter zwischen 8 und 9 mißt.

9. Verfahren nach Anspruch 8, dadurch gekennzeichnet, daß man den pH-Wert durch Zufügen einer Alkalibase, vorzugsweise von Ätznatron zu dem Calciumsulfatbrei einstellt.

10. Verfahren nach einem der Ansprüche 3 bis 9, dadurch gekennzeichnet, daß man das Mahlungsverfahren mittels Kugeln, insbesondere Glaskugeln, in einem Zerkleinerer gemäß einer Menge zwischen 50 und 90 Vol.-%, vorzugsweise zwischen 75 und 85 Vol.-% bezüglich des nützlichen Zerkleinerervolumens durchführt.

11. Verfahren nach Anspruch 10, dadurch gekennzeichnet, daß man Kugeln verwendet, die einen Durchmesser zwischen 0,1 mm und 3,5 mm, vorzugsweise zwischen 0,8 mm und 2,5 mm und noch bevorzugter zwischen 1,2 und 2,2 mm aufweisen.

12. Verfahren nach einem der Ansprüche 1 bis 11, dadurch gekennzeichnet, daß man als Alkalipolyphosphat Natriumtripolyphosphat zufügt.

13. Verfahren nach Anspruch 12, dadurch gekennzeichnet, daß man Natriumtripolyphoaphat in einer Menge von 0,05 bis 1,0 Gew.-%, vorzugsweise von 0,2 bis 0,6 Gew.-% zufügt.

14. Verfahren nach einem der Ansprüche 1 bis 13, dadurch gekennzeichnet, daß man Ethylencopolymer in einer Menge von 0,05 bis 1,8 Gew.-%, vorzugsweise von 0,08 bis 1,5 Gew.-% und noch bevorzugter von 0,1 bis 1,1 Gew.-% Wirkstoff zufügt.

15. Verfahren nach einem der Ansprüche 1 bis 14, dadurch gekennzeichnet, daß man Carboxymethylcellulose oder Hydroxyethylcellulose in einer Menge von 0,05 bis 1 Gew.-%, vorzugsweise von 0,1 bis 0,6 Gew.-% zufügt.

16. Verfahren nach einem der Ansprüche 1 bis 15, dadurch gekennzeichnet, daß man Natriumcarboxymethylcellulose mit einer Viskosität kleiner als 100 mPa.s für 4 Gew.-% bei einer Temperatur von 25 °C und einem pH in Lösung auf 1 Gew.-% zwischen 5 und 9, vorzugsweise zwischen 6 und 8,5 zufügt.

17. Verfahren nach einem der Ansprüche 1 bis 3, dadurch gekennzeichnet, daß man Hydroxyethylcellulose in einer Menge von 0,05 bis 1,8 Gew.-%, vorzugsweise von 0,1 bis 1,5 Gew.-%, noch bevorzugter von 0,2 bis 1,2 Gew.-% zufügt.

18. Verfahren nach einem der Ansprüche 1 bis 17, dadurch gekennzeichnet, daß man den Calciumsulfatbrei einer Flotation, vorzugsweise vor seinem Mahlen, unterzieht.

19. Verfahren nach Anspruch 18, dadurch gekennzeichnet, daß man während der Flotation ein zur Schaumbildung bestimmtes Schäumungsmittel einsetzt, und daß man die so produzierten Schaumstoffe durch Einsatz eines Sammlermittels sammelt.

20. Verfahren nach einem der Ansprüche 1 bis 19, dadurch gekennzeichnet, daß man den Calciumsulfatbrei einer Hydrozyklonierung, vorzugsweise vor seinem Mahlen, noch bevorzugter vor der Flotation, unterzieht.

21. Verfahren zur Herstellung einer wäßrigen Suspension auf der Basis von Calciumsulfat, das insbesondere zur Verwendung als Massefüllstoff oder Beschichtungspigment bestimmt ist, nach einem der Ansprüche 1 bis 20, dadurch gekennzeichnet, daß man einen Calciumsulfatbrei kombinierten Hydrozyklonierungs- und Flotationsverfahren unterzieht, wobei diese Verfahren gegebenenfalls mit einem Mahlungsverfahren kombiniert werden.

22. Verfahren nach Anspruch 21, dadurch gekennzeichnet, daß der Flotation ein Filtern des Calciumsulfatbreis, vor dem eventuellen Mahlungsverfahren, folgt.

23. Verfahren nach Anspruch 21 oder 22, dadurch gekennzeichnet, daß der Hydrozyklonierung eine Siebung vorausgeht.

24. Verfahren nach Anspruch 22 oder 23, dadurch gekennzeichnet, daß dem Filtern eine Ozonbehandlung und/oder Behandlung mit Wasserstoffsuperoxidlösung und/oder Sauerstoff und/oder Chlorbehandlung, insbesondere durch Chloroxide, wie Chlordioxid und/oder Chlorate und/oder Chlorsäure vorausgeht.

25. Verfahren nach einem der Ansprüche 21 bis 24, dadurch gekennzeichnet, daß man den Calciumsulfatbrei einer Hydrozyklonierungsstufe unterzieht, derart, daß die Teilchen mit einem Durchmesser unter einem Schwellenwert zwischen 5 und 40 µm, vorzugsweise zwischen 10 und 30 µm und noch bevorzugter zwischen 18 und 22 µm beseitigt werden.

26. Verfahren nach einem der Ansprüche 21 bis 25, dadurch gekennzeichnet, daß man den Calciumsulfatbrei einer Hydrozyklonierungsstufe unterzieht, derart, daß die Teilchen mit einem Durchmesser über einem Schwellenwert zwischen 50 und 150 µm, vorzugsweise zwischen 80 und 120 µm und noch bevorzugter zwischen 95 und 105 µm beseitigt werden.
